# EUROPÄISCHE PATENTSCHRIFT

(11) **EP 4 059 620 B1**
(45) Veröffentlichungstag und Bekanntmachung des Hinweises auf die Patenterteilung: **28.02.2024**
(21) Anmeldenummer: 22152722.9
(22) Anmeldetag: 21.01.2022
(51) Int. Cl.: B06B 1/02

(54) **VERSORGUNGSSPANNUNGSUNABHÄNGIGER ULTRASCHALLGENERATOR MIT VARIABLER PULSWEITENMODULATION**
SUPPLY-VOLTAGE INDEPENDENT ULTRASOUND GENERATOR WITH VARIABLE PULSE WIDTH MODULATION
GÉNÉRATEUR D'ULTRASONS INDÉPENDANT DE LA TENSION D'ALIMENTATION À MODULATION DE LA LARGEUR D'IMPULSIONS VARIABLE

(30) Priorität: 18.03.2021 DE 102021106587
(43) Veröffentlichungstag der Anmeldung: 21.09.2022
(73) Patentinhaber: Pepperl+Fuchs SE, 68307 Mannheim (DE)
(72) Erfinder: Dörr, Klaus, 68229 Mannheim (DE)
(74) Vertreter: Kanzlei Dr. Negendanck Patentmanufaktur

(56) Entgegenhaltungen:
- DE-A1- 3 841 819
- DE-A1- 4 233 016
- DE-A1-102016 118 721

## Beschreibung

Die Erfindung betrifft Ultraschallsensoren, insbesondere deren Ultraschall-Sender, insbesondere deren Ultraschallgeneratoren.

Ultraschallsensoren sind aus der Praxis bekannt und vielseitig einsetzbar. So ist z.B. aus dem Produkt UDC-30GM-085-3E3 des Herstellers Pepperl+Fuchs und einem zugehörigen Datenblatt "Pepperl+Fuchs, Doppelmaterial-Sensor UDC-30GM-085-3E3, 19.05.2020" ein Doppelmaterial-Sensor bekannt. Der Sensor ist für Versorgungsspannungen zwischen 18V und 30V geeignet.

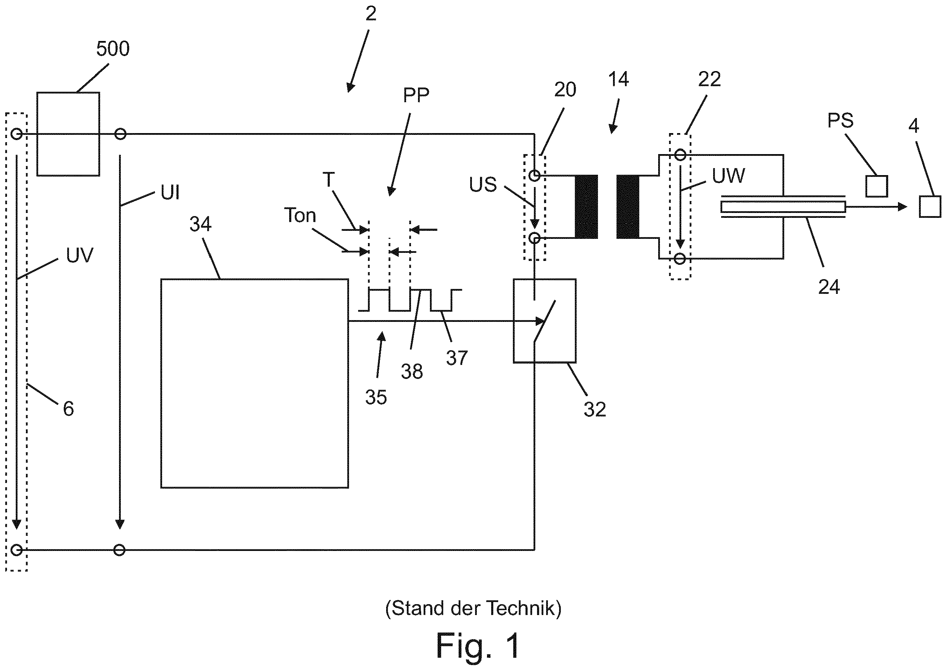

Fig. 1 zeigt in einem stark schematisierten Blockschaltbild den prinzipiellen Aufbau eines Teils des Sensors bzw. dessen Ultraschall-Sendeteils, mithin einen Ultraschallgenerator 2 gemäß Stand der Technik, der zur Erzeugung von Ultraschall 4 in Form eines Ultraschallsignals aus einer Versorgungsspannung UV dient.

An einem Eingang 6 wird beim Betrieb des Sensors die Versorgungsspannung UV angelegt, die im Beispiel gemäß Herstellervorgaben bestimmungsgemäß Werte zwischen 18V und 30V annehmen darf. Im Beispiel wird der Sensor mit einer konstanten Spannung von 20V betrieben. Über ein lineares Netzteil 500, hier einen integrierten linearen Spannungs-Längsregler, wird jede erlaubte Versorgungsspannung UV zwischen 18V und 30V auf die immer gleiche interne Versorgungsspannung UI von hier 15V geregelt. Mit der internen Versorgungsspannung UI liegt damit eine konstante Spannung für eine nachfolgend erläuterte Sendestufe vor:
Eine Steuereinheit 34 bzw. Recheneinheit, hier ein Mikrocontroller, betreibt mit einem PWM-Signal 35 (PWM: Pulsweitenmodulation) ein Schaltelement 32, hier ein HalbleiterLeistungsschalter. Das PWM-Signal 35 weist ein Puls-Pausenverhältnis PP von 50% / 50% auf. D.h. eine Periode der Periodendauer T des PWM-Signals 35 weist eine Einschaltzeit Ton von 50% der Periodendauer T und eine Ausschaltzeit von ebenfalls 50% der Periodendauer T auf. Das PWM-Signal 35 ist also ein Steuersignal zum Ansteuern des Schaltelements 32 mit stets festem Tastverhältnis 50/50, unabhängig davon, welche Versorgungsspannung UV zwischen 18V und 30V am Eingang 6 tatsächlich anliegt.

Das Schaltelement 32 befindet sich in Reihenanordnung mit einem elektrischen Übertrager 14 bzw. dessen Primäranschluss 20. Über der Reihenanordnung liegt die Schaltspannung US an, die anhand des PWM-Signals 35 und der Schaltelements 32 als gepulste Spannung mit 0V- / Ul-Pulsen erzeugt wird. Der Übertrager 14 transformiert die über dem Primäranschluss 20 anliegende Schaltspannung US auf eine Wandlerspannung UW an seinem Sekundäranschluss 22. Mit dieser Wandlerspannung UW wird ein am Sekundäranschluss 22 angeschlossener Wandler 24, hier ein Piezowandler, betrieben. Dieser erzeugt aus der Wandlerspannung UW das Ultraschall 4 bzw. das Ultraschallsignal und strahlt dieses ab. Aus der DE 10 2016 118 721 A1 ist ein Verfahren bekannt zum Betreiben eines Ultraschallschwingers mit einem wechselgerichteten Netzsignal, bei dem der Ultraschallschwinger mittels eines pulsbreitenmodulierten elektrischen Anregungssignals zu Schwingungen angeregt wird, welches pulsbreitenmodulierte Anregungssignal durch signaltechnische Verknüpfung eines elektrischen Anregungssignals mit einem Pulsbreitenmodulationssignal erzeugt wird, und bei dem das Pulsbreitenmodulationssignal in Abhängigkeit von einer vorgegebenen an den Ultraschallschwinger zu übertragenen Leistung angepasst wird.

Aus der DE-OS 42 33 016 A1 ist eine elektrische Einrichtung bekannt für ein Ultraschallreinigungsgerät mit einem Ultraschallgenerator und einem Ultraschallwandler, die Teile eines schwingenden Systems sind, wobei der Ultraschallgenerator eine Leistungs-Endstufe und einen von der Leistungs-Endstufe gespeisten Hochfrequenztransformator enthält und der Ultraschallwandler ein piezoelektrisches Wandlerelement aufweist, das durch Anlegen der Hochfrequenzspannung piezoelektrisch zu Ultraschallschwingungen anregbar ist, die in das Reinigungsmedium, z. B. in eine Reinigungsflüssigkeit abgestrahlt werden, wobei die Leistungsabgabe des Ultraschallgenerators einstellbar ist und durch eine Regelung konstant gehalten wird.

Aufgabe der vorliegenden Erfindung ist es, Verbesserungen in Bezug auf derartige Ultraschallsensoren vorzuschlagen.

Die Aufgabe wird gelöst durch einen Ultraschallgenerator gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Der Ultraschallgenerator weist einen Eingang für eine Versorgungsspannung auf. Im Betrieb des Ultraschallgenerators liegt also eine von Null verschiedene Versorgungsspannung über dem Eingang an. Die nachfolgenden Ausführungen, die sich auf Spannungen, Leistungen usw. beziehen, sind stets so zu verstehen, dass hierbei ein regulärer Betrieb des Ultraschallgenerators vorausgesetzt wird, d.h. Spannungen, Ströme etc. in bestimmungsgemäßer bzw. zulässiger Höhe vorhanden sind usw. Der Ultraschallgenerator ist dafür ausgelegt bzw. eingerichtet, dass die Versorgungsspannung eine Gleichspannung ist. Der Eingang weist zwei Pole bzw. Kontakte, Anschlüsse oder dergleichen auf, zwischen welchen die Versorgungsspannung anliegt.

Der Ultraschallgenerator enthält eine Schalteinheit. Die Schalteinheit weist den Eingang und einen Ausgang auf. Auch der Ausgang weist entsprechend dem Eingang insbesondere zwei Pole auf, kann jedoch auch mehrere, insbesondere drei Pole aufweisen (z.B. Gegentaktbetrieb, siehe unten). Die Schalteinheit ist dazu eingerichtet, aus der Versorgungsspannung am Eingang eine Schaltspannung am Ausgang zu erzeugen. Die Schaltspannung ist dabei eine gepulste Gleichspannung, also eine Folge von Gleichspannungspulsen zwischen den beiden Polen des Ausgangs, wie weiter unten erläutert wird.

Der Ultraschallgenerator enthält ein Koppelelement. Dieses ist weist einen Koppeleingang auf, mit dem das Koppelelement eins-zu-eins am Ausgang bzw. dessen insbesondere beiden, oder mehr, insbesondere auch drei, Polen angeschlossenen ist. Das Koppelelement weist außerdem einen zweipoligen Koppelausgang auf. Das Koppelelement ist dazu eingerichtet, die am Koppeleingang anliegende Schaltspannung auf eine am Koppelausgang anliegende Wandlerspannung abzubilden. Insbesondere ist das Koppelelement eine einfache elektrische Durchverbindung: jeweils ein Pol des Koppelausgangs ist also mit einem Pol des Koppeleingangs elektrisch durchverbunden. Damit kann das Koppelelement insbesondere zu einem infinitesimal kleinen oder "Null-" Element" entarten, wodurch der Koppelausgang dann gleichsam den Ausgang der Schalteinheit darstellt und die Koppeleinheit auch hinweggedacht werden könnte.

Der Ultraschallgenerator enthält einen Wandler. Dieser weist einen wiederum zweipoligen Wandlereingang auf, der wiederum eins-zu-eins am Koppelausgang angeschlossenen ist. Der Wandler weist außerdem einen Wandlerausgang auf. Der Wandler ist dazu eingerichtet, aus der Wandlerspannung am Wandlereingang Ultraschall bzw. ein Ultraschallsignal am Wandlerausgang zu erzeugen und dort abzustrahlen. Der Wandlerausgang ist daher ein Abgabebereich des Wandlers für Ultraschall. Im Betrieb des Ultraschallgenerators weist der erzeugte Ultraschall eine Sendeleistung einer bestimmten Größe auf.

Die Schalteinheit enthält einen Stromkreis. Dieser enthält eine, insbesondere besteht dieser aus einer, Reihenanordnung aus dem Eingang, dem Ausgang und einem Schaltelement. Unter "Reihenanordnung" ist jede Verschaltung von elektrischen Elementen in einer Reihe, d.h. nacheinander, zu verstehen, wobei die Verbindungen zwischen den einzelnen in der Reihe benachbarten Elementen auch mehradrig bzw. mehrpolig, insbesondere zweipolig, ausgeführt sein können. Dies betrifft insbesondere eine zweipolige bzw. zweiadrige Verbindung zwischen Ausgang und Schaltelement. Das Schaltelement kann dabei einen oder mehrere, insbesondere zwei, einzelne Schalter in Parallelschaltung enthalten. Die Schalteinheit enthält weiterhin eine auf das Schaltelement im Betrieb einwirkende bzw. dieses ansteuernde Steuereinheit.

Die Steuereinheit ist dazu eingerichtet, das Schaltelement in einem PWM-Betrieb (PWM: Pulsweitenmodulation) mit einem PWM-Signal anzusteuern, das ein Puls-Pause-Verhältnis aufweist. Im Falle mehrerer Schalter kann das PWM-Signal dann mehrere, insbesondere im Falle nur zweier Schalter zwei gegentaktige, Teilsignale enthalten, die jeweils zum Ansteuern eines der Schalter, insbesondere der beiden Schalter im Gegentakt, dienen. "Gegentaktig" ist hier so zu verstehen, dass die PWM-Signale das gleiche Puls-Pausen-Verhältnis aufweisen, jedoch zueinander um 180° phasenverschoben und in diesen Sinne "gegentaktig" sind. In fachüblicher Weise bedeutet dabei ein Schließen des Schalters einen "Puls" des PWM-Signals, ein Öffnen des Schalters eine "Pause" des PWM-Signals. Ein Puls-Pause-Verhältnis von 100% bedeutet dabei einen durchgehenden Puls, d.h. einen dauerhaft geschlossenen Schalter; ein Puls-Pause-Verhältnis von 0% bedeutet eine dauerhafte Pause, d.h. einen geöffneten Schalter. Ein Puls-Pause-Verhältnis von X% bedeutet eine Folge von jeweils gleich langen Perioden des PWM-Signals, die jeweils Zeiten X% der Dauer T eines geschlossenen (Puls) und ansonsten offenen Schalters (Pause) enthalten. Die Steuereinheit ist weiterhin dazu eingerichtet, das Puls-Pause-Verhältnis des PWM-Signals auf Basis einer Kenngröße so zu wählen, dass unabhängig von der Größe bzw. dem Wert der Versorgungsspannung die Sendeleistung einem vorgebbaren Sende-Sollwert entspricht. Die Kenngröße ist mit der Sendeleistung des Ultraschalls korreliert. Dies ist so zu verstehen, dass diese Korrelation bei bzw. unter der Annahme eines gleichbleibenden Puls-Pause-Verhältnisses besteht. Bei mehreren PWM-Signalen bezieht sich das Puls-Pausen-Verhältnis dann also auf alle der PWM-Signale. Bei genau zwei Schaltern sind die PWM-Signale im Gegentakt ausgeführt, d.h. das Puls-Pausen-Verhältnis gilt für beide um 180° phasenversetzte Signale.

Insgesamt ergibt sich in der Ausführungsform mit genau zwei Schaltern und einem Übertrager mit Mittenanzapfung eine Gegentaktendstufe im Ultraschallgenerator.

Dabei wird vorausgesetzt, dass sich die Versorgungsspannung in einem zulässigen bzw. bestimmungsgemäßen Bereich, also zwischen einer Minimal- und einer Maximalgröße bewegt. Minimal- und Maximalgröße sind dabei für den Ultraschallgenerator vorgegeben, z.B. vom Hersteller aufgrund von Designvorgaben, Bauteilbelastbarkeiten usw. Die Versorgungsspannung darf also Werte in einem erlaubten bzw. bestimmungsgemäßen Bereich, z.B. zwischen 18V und 30V, annehmen. Für diesen Spannungsbereich ist der Ultraschallgenerator ausgelegt. Bei einem konkreten Betrieb des Ultraschallgenerators ist von dessen Anwender insbesondere eine Versorgungsspannung einer bestimmten konstanten Größe innerhalb des erlaubten Bereiches gewählt, z.B. konstant 20V.

Für den Fall unterschiedlicher Versorgungsspannungen wird also der jeweils gleiche Sende-Sollwert erreicht. Dies gilt sowohl für beliebige, aber fest gewählte, also zeitlich konstante Spannungen als auch für zeitlich schwankende Spannungen. Mit anderen Worten ist der Sende-Sollwert also beliebig (in einem bestimmungsgemäßen Bereich erreichbar Sollwerte), aber fest vorgegeben. Die Sendeleistung wird also konstant gehalten, unabhängig davon bzw. egal, welche Spannung (im erlaubten Spannungsbereich) anliegt. "Konstant" versteht sich hierbei einschließlich etwaiger Toleranzen, z.B. die Einhaltung eines Sollwertes +/- einer Abweichung bzw. Toleranz, lediglich beispielhaft z.B. 1%, 2%, 5%, 10%, 20% usw., je nach gewünschter Genauigkeit der einzuhaltenden Sendeleistung.

Der Ultraschallgenerator ist insbesondere ein Generator für einen bzw. eines Sendewandlers oder Sende- und Empfangswandlers eines Ultraschall-Senders oder kombinierten Ultraschall-Sende-Empfängers in einem Ultraschall-Sensor.

Der vorgebbare Sendesollwert kann auch während der Aussendung von Ultraschall - insbesondere in Form eines Ultraschall-Pulspaketes - variieren bzw. variiert werden. Dies kann insbesondere durch Variation des vorgegebenen Sende-Sollwertes (im Verlauf des Pulspaketes) geschehen. So ändert sich dann (z.B. bei gleichbleibender Versorgungsspannung) auch in der Regel das gewählte Puls-Pausen-Verhältnis während der Aussendung des Pulspaketes.

Alternativ oder zusätzlich kann der Ultraschallgenerator, insbesondere die Steuereinheit, auch dazu eingerichtet sein, nur zeitabschnittsweise wie bisher beschrieben zu arbeiten, also nach dem Kern-Erfindungsaspekt: "Puls-Pausenverhältnis anhand der Kenngröße so wählen, dass ..."; in anderen Zeitabschnitten wird der Ultraschallgenerator dann in herkömmlicher Weise (also nicht nach dem beschriebenen Erfindungsaspekt) so betrieben, dass ein wählbares Puls-Pausen-Verhältnis fest vorgegeben ist. So kann z.B. Folgendes erreicht werden:
Z.B. werden die ersten 10 Pulse eines Burstpaketes mit einem fest vorgegebenen Puls-Pausen- bzw. Tastverhältnis von z.B. 50% erzeugt, und danach werden weitere bzw. die restlichen Pulse entsprechend dem Erfindungsaspekt erzeugt, d.h. das Puls-Pausen-Verhältnis wird dann wieder auf Basis der Kenngröße bestimmt, was dann z.B. zu einer Reduzierung auf 25% führen kann.

Ein Aspekt der hier vorliegenden Erfindung ist es daher, den Ultraschallwandler bzw. die Steuereinheit in Zeitabschnitten wie oben beschrieben "kern-erfindungsgemäß" zu betrieben und in anderen Zeitabschnitten "nicht kern-erfindungsgemäß" (also nicht nach dem oben genannten Erfindungsaspekt) zu betreiben. Der Ultraschallwandler ist in dieser Ausführungsform also zu einem derartigen wahlweisen bzw. optionalen Wechselbetrieb eingerichtet.

Die Erfindung beruht auf folgenden Überlegungen:
Die Sendeleistung eines Ultraschall-Generators - und damit die entsprechende Empfangsamplitude eines Empfängers - eines Ultraschall-Sensors soll nicht von der Versorgungsspannung des Sensors bzw. des Generators abhängig sein. Wünschenswert ist es außerdem, die Verlustleistung im Sensor bzw. Sender zu reduzieren. So kann zum einen die Lebensdauer des Sensors verlängert werden, zum anderen wird dann weniger Wärme im Sensor umgesetzt und so eine Temperaturdrift der im Sensor enthaltenen Bauteile, insbesondere des Wandlers, reduziert. So werden auch die Systemeigenschaften des Sensors verbessert.

Die Erfindung beruht auf der Idee, dass der Sendeschall eines gegenüber dem Stand der Technik modifizierten Ultraschallgenerators weiterhin unabhängig von der Versorgungsspannung des Sensors sein soll. Um bei dem Sensor eine versorgungsspannungsunabhängige Schallleistung zu realisieren wurde bisher - siehe hierzu nochmals Figur 1 - mit einem Linearnetzteil eine immer gleiche interne Versorgungsspannung ("UI") als Grundlage für die Schaltspannung, also als "Versorgungsspannung der Sendestufe" erzeugt. Diese Spannung lag bedingt durch die üblichen Anforderungen eines Linearnetzteils (minimaler Spannungsabfall) - z.B. mit 15V - unterhalb der minimalen bzw. minimal nötigen Versorgungsspannung - hier z.B. 18V für zulässige bzw. bestimmungsgemäße Versorgungsspannungen zwischen 18V und 30V. Damit hat das Netzteil stets entsprechende Verlustleistung im Sensor erzeugt. Denn die überschüssige Spannung (z.B. 3V zwischen Ul = 15V und UV = 18V oder bis zu 15V zwischen Ul = 15V und UV = 30V) zusammen mit dem fließenden Strom wird im Netzteil in Wärme umgesetzt.

Die Erfindung bzw. die hier vorgeschlagene Realisierung beruht auf der Idee, die Sendeleistung des Wandlers zu steuern, in dem die Pulslänge (Pulsanteil im Puls-Pausen-Verhältnis) des Ansteuersignals (von der Steuereinheit zum Schalter) entsprechend der Versorgungsspannung eingestellt wird. Es erfolgt also die Abkehr von dem bisher konstanten Puls-Pause-Verhältnis von 50% in Verbindung mit einer festen internen Versorgungsspannung Ul.

Nicht nur bei Schrankensensoren wie oben beschrieben, sondern auch bei abstandsmessenden Ultraschallsensoren besteht die entsprechende Anforderung, dass hier die Echospannung von der Versorgungsspannung unabhängig sein soll. Bei allen Sensoren mit einer Übertragerendstufe kann daher die vorliegende Erfindung angewendet werden. Die Erfindung kann also ebenfalls bei abstandsmessenden Ultraschallsensoren mit einer Übertragerendstufe eingesetzt werden, indem die Übertragerendstufe mit dem vorgeschlagenen Ultraschallgenerator ausgeführt wird.

Gemäß der Erfindung ergibt sich damit eine versorgungsspannungsunabhängige Leistungssteuerung des Sendewandlers durch PWM-Ansteuerung.

Gemäß der Erfindung ergibt sich eine Verringerung der Verlustleistung, da insbesondere ein verlustbehafteter linearer Längsregler nicht mehr nötig ist. Weiterhin ergibt sich eine Verringerung der Bauteilanzahl und damit der Bauteilkosten, da auf den linearen Längsregler und dessen Beschaltungskomponenten verzichtet werden kann.

Gemäß der Erfindung wird also nicht mehr - wie oben zum Stand der Technik bezüglich Figur 1 beschrieben - mit einem festen Puls-Pausen-Verhältnis von 50%, sondern mit einem variablen Puls-Pausen-Verhältnis gearbeitet, wobei dessen Wert abhängig von der Kenngröße, insbesondere der Versorgungsspannung am Eingang (siehe unten) gewählt wird. Somit kann eine - innerhalb von Toleranzgrenzen - konstante Ausgangsleistung des abgestrahlten Ultraschalls erreicht werden.

Zwar ist es nachteilig, dass im Gegensatz zum oben erläuterten Stand der Technik, mehr Bauteile für einen höheren Versorgungsspannungsbereich ausgelegt werden müssen. Denn es existiert kein Schaltungsbereich mehr (in Figur 1: "rechts" von UI), bei dem die Versorgungsspannung über das Netzteil sicher auf einen niedrigeren Wert reduziert ist. Auch ein eventuell vorhandener Übertrager muss nun diesbezüglich etwas größer dimensioniert werden. Außerdem muss in einer bevorzugten Ausführungsform (siehe unten, Erfassung der Versorgungsspannung) die Versorgungsspannung des Sensors zyklisch gemessen werden. Auch ist eine vergleichsweise höhere Rechenlast einer CPU für die Ermittlung bzw. Anpassung des Puls-Pausen-Verhältnisses erforderlich. Dies wird jedoch in Kauf genommen, um wie oben beschrieben die Verlustleistung zu reduzieren und die Bauteilzahl zu verringern, was zu den erläuterten Vorteilen führt.

In einer bevorzugten Ausführungsform ist das Koppelelement ein Übertrager. Der Koppeleingang ist ein wiederum insbesondere zwei-, oder drei- oder mehrpoliger Primäranschluss des Übertragers. Der Koppelausgang ist ein zweipoliger Sekundäranschluss des Übertragers und der Übertrager ist dazu eingerichtet, die am Primäranschluss anliegende Schaltspannung in die Wandlerspannung am Sekundäranschluss zu übertragen. Die Übertragung beinhaltet insbesondere ein Hochtransformieren, z.B. von ca. 15V auf ca. 300V. Das oben genannte "Abbilden" der Spannungen erfolgt also durch "Übertragen".

Durch einen entsprechenden Übertrager ist es möglich, mit vergleichsweise niedriger Versorgungsspannung zu arbeiten und dennoch eine hohe Spannung für den Wandler erhalten zu können.

In einer nicht zur Erfindung gehörenden Ausführungsform ist die Kenngröße der Wert bzw. die Größe der Wandlerspannung bzw. ein damit korrelierter Wert. Die Steuereinheit ist dazu eingerichtet, das Puls-Pause-Verhältnis dadurch zu wählen, dass die Kenngröße durch Einregeln des Puls-Pausenverhältnisses mit Hilfe einer Regelvorschrift auf einen vorgebbaren Spannungs-Sollwert eingeregelt wird. Dadurch, d.h. als Folge dieser Regelung, entspricht die Sendeleistung dem Sende-Sollwert. Insbesondere folgender Regelkreis wird dabei etabliert: Die Wandlerspannung bildet die Regelgröße, der Spannungs-Sollwert die Führungsgröße und das Puls-Pause-Verhältnis die Stellgröße.

Auch für den Spannungs-Sollwert gelten die obigen Ausführungen, dass dieser also stets gleich ("beliebig, aber fest") für variable unterschiedliche Versorgungsspannungen gewählt werden kann. Insofern lässt sich hier eine Regelung für die Wandlerspannung erreichen. Da bei einer entsprechend wunschgemäß eingeregelten Wandlerspannung nur noch der Wandler (mit etwaigen Toleranzen, z.B. Temperaturdrift etc.) nachgeschaltet ist, lässt sich hier die Leistung des abgestrahlten Ultraschalls besonders genau wunschgemäß einregeln, so dass die Sendeleistung insbesondere mit vergleichsweise geringen Toleranzen festlegbar ist.

Gemäß der Erfindung ist die Kenngröße der Wert der Versorgungsspannung bzw. ein damit korrelierter Wert. Die Steuereinheit ist dazu eingerichtet, das Puls-Pause-Verhältnis dadurch zu wählen, dass die Kenngröße nach einer vorgebbaren Abbildungsvorschrift auf das Puls-Pausen-Verhältnis abgebildet wird. Als Folge dieser Maßnahme entspricht die Sendeleistung dann wieder dem Sende-Sollwert.

Diese Ausführungsform beruht auf der Annahme, dass in einem gegebenen Ultraschallgenerator ein ausreichend genauer bzw. reproduzierbarer Zusammenhang zwischen der Größe der Versorgungsspannung und der erzeugten Ultraschallenergie - bei gleichbleibendem Puls-Pause-Verhältnis - und damit die geforderte Korrelation besteht. Weiterhin wird angenommen, dass sich die Sendeleistung ändert, wenn das Puls-Pausen-Verhältnis geändert wird. So kann - z.B. durch Berechnung, Simulation oder experimentell - ein Wert / Teil der Abbildungsvorschrift erzeugt werden, indem zu einer gegebenen Größe der Versorgungsspannung ein zugehöriges Puls-Pausen-Verhältnis ermittelt wird, um eine bestimmte Sendeleistung zu erzeugen. Durch Bestimmung von entsprechenden Werten von Puls-Pause-Verhältnisses für eine Anzahl unterschiedlicher Versorgungsspannungen kann so die Abbildungsvorschrift beliebig genau bzw. fein auf verschiedene Versorgungsspannungen abgestuft, erzeugt werden.

Nach dieser Ausführungsform ergibt sich also eine reine Steuerung anstelle einer Regelung der Ultraschall-Leistung. Damit ergeben sich - nach Festlegung eines bestimmten aktuellen Puls-Pausen-Verhältnisses - im Vergleich zu der Regelung oben üblicherweise größere Toleranzen in der sich einstellenden gewünschten Ultraschall-Leistung. Ungenauigkeiten entstehen dabei nämlich durch Schwankungen in den Bauteileigenschaften des Ultraschallgenerators. Nicht nur der Wandler, sondern beispielsweise auch ein Übertrager sorgen - z.B. durch Temperaturdrift - also nunmehr für Ungenauigkeiten bzw. Toleranzen in Bezug auf die am Ende tatsächlich abgestrahlte Ultraschall-Leistung.

Als Abbildungsvorschrift bietet sich insbesondere eine Übertragungsfunktion und/oder eine Look-Up-Tabelle an.

Dies wird in Kauf genommen für den Vorteil einer insgesamt einfacheren Ausführung einer Steuerung gegenüber einer Regelung. Ein weiterer Vorteil ergibt sich zum Beispiel für Wandlerspannungen im Hochvolt-Bereich (z.B. mehrere hundert Volt, z.B. ca. 300V), wenn diese durch einen Übertrager aus einer vergleichsweise niedrigen Schaltspannung (z.B. 15V) erzeugt werden. Probleme mit der Messung / Verarbeitung / Rückkopplung der hohen Wandlerspannung zu einer Recheneinheit auf die Niedervoltseite können so vermieden werden.

In einer bevorzugten Ausführungsform ist die Steuereinheit dazu eingerichtet, das Puls-Pause-Verhältnis zu senken, wenn die Größe bzw. der Wert der Versorgungsspannung zunimmt und das Puls-Pause-Verhältnis zu erhöhen, wenn die Größe bzw. der Wert der Versorgungsspannung abnimmt. Somit wird die bei steigender Spannung (und bei gleichem Puls-Pause-Verhältnis theoretisch) zunehmende Eingangs-Leistung vermehrt in dem Maße begrenzt, um zu einer gewünscht konstanten Ultraschall-Ausgangsleistung zu gelangen.

In einer bevorzugten Ausführungsform ist die Steuereinheit dazu eingerichtet, das Puls-Pause-Verhältnis zwischen 0,1% und 65%, insbesondere zwischen 1% und 50% zu wählen. Alternativ oder zusätzlich ist der Ultraschallgenerator für Versorgungsspannungen zwischen 15V und 50 V, insbesondere zwischen 18V und 30V, eingerichtet. Alternativ oder zusätzlich ist der Ultraschallgenerator für Schaltspannungen im Bereich zwischen 5V und 30V, insbesondere von 15V mit einem Toleranzbereich von 10%, eingerichtet. Mit den entsprechenden Puls- Pause-Verhältnissen in diesem Bereich lassen sich besonders gute Ergebnisse zur Ultraschallerzeugung erzielen, mit den entsprechenden Spannungen ist der Ultraschallgenerator für in der Praxis übliche Spannungsbereiche ausgelegt. Die entsprechende "Einrichtung" der Steuereinheit bzw. des Ultraschallgenerators erfolgt insbesondere durch Auswahl von für diese Belastungen geeigneten Bauelementen bzw. der zulässigen Spannungsbereiche / Lastbereiche von enthaltenen Bauelementen. Eine solche Auswahl trifft insbesondere der Hersteller / Entwerfer eines konkreten Ultraschallgenerators, insbesondere je nach Anwendungsfall etc.

In einer bevorzugten Ausführungsform enthält die Schalteinheit eine mit der Steuereinheit verbundene Messeinheit. Diese dient dann zur Ermittlung der Kenngröße oder eines damit korrelierten Wertes, insbesondere des Wertes der Versorgungsspannung oder der Wandlerspannung als Kenngröße. Sie dient gegebenenfalls auch zu deren Übermittlung an die Steuereinheit. Die Steuereinheit ist dann dazu eingerichtet, die ermittelte Größe zu verarbeiten, um wiederum das geeignete Puls-Pausen-Verhältnis hieraus zu ermitteln.

In einer bevorzugten Variante dieser Ausführungsform enthält die Steuereinheit die Messeinheit. Insbesondere ist die Steuereinheit in Form eines integrierten Mikrocontrollers mit Messfunktion ausgeführt oder enthält diesen. So wird die Anzahl der Bauteile weiter reduziert.

In einer bevorzugten Ausführungsform enthält die Steuereinheit einen Mikrocontroller oder ist ein solcher, insbesondere - wie oben erwähnt - mit integrierter Messeinheit.

In einer bevorzugten Ausführungsform ist das Schaltelement ein elektronischer Schalter, insbesondere enthält dieser einen Leistungstransistor bzw. ist ein solcher. Somit ergibt sich ein besonders verschleißfreier Generator.

In einer bevorzugten Ausführungsform enthält der Ultraschallgenerator kein Netzteil. Unter "Netzteil" ist hierbei insbesondere ein Schaltnetzteil oder ein Bauteil zur Spannungsstabilisierung zu verstehen. Mit letzterem Bauteil ist insbesondere ein Längsregler oder Spannungsregler (fest oder variabel), insbesondere ein integriertes Spannungsregler-IC angesprochen. Ein entsprechendes Netzteil ist in der Regel dann auch außerhalb des Ultraschallgenerators nicht erforderlich, da dieser - wie im Stand der Technik - für einen entsprechend weiten Bereich von Versorgungsspannungen (z.B. die o.g. üblichen 18 bis 30V) ausgelegt ist. Erst bei der Erzeugung der Versorgungsspannung (insbesondere dann für eine Mehrzahl von Geräten, Modulen etc. gemeinsam, von denen der Ultraschallgenerator nur eines ist), sind dann solche Komponenten wieder erforderlich.

Die Aufgabe der Erfindung wird auch gelöst durch einen Ultraschall-Schrankensensor gemäß Patentanspruch 10. Dieser enthält einen Sendeteil zum Aussenden von Ultraschall und einen Empfangsteil zum Empfangen zumindest eines Teils des ausgesendeten Ultraschalls. Der Sendeteil enthält einen erfindungsgemäßen Ultraschallgenerator zum Erzeugen des Ultraschalls.

Der Ultraschall-Schrankensensor und zumindest ein Teil dessen möglicher Ausführungsformen sowie die jeweiligen Vorteile wurden sinngemäß bereits im Zusammenhang mit dem erfindungsgemäßen Ultraschallgenerator erläutert.

In einer bevorzugten Ausführungsform ist der Ultraschall-Schrankensensor ein Doppelmaterialsensor, insbesondere ein Doppelbogensensor. Für derartige Sensoren ist die Erfindung besonders vorteilhaft, da die Ultraschall-Ausgangsleistung besonders vorteilhaft auf einem gewünschten Sollwert gehalten werden kann.

Die Aufgabe der Erfindung wird auch gelöst durch einen Ultraschall-Reflexionssensor gemäß Patentanspruch 12, mit einem erfindungsgemäßen Ultraschallgenerator zum Erzeugen von auszusendendem Ultraschall. Der Wandler im Ultraschallgenerator ist dabei auch zum Empfangen mindestens eines Teils von reflektiertem Ultraschall ausgebildet. Somit ist die Erfindung auch für einen Ultraschall-Reflexionssensor, insbesondere abstandsmessenden Ultraschallsensor einsetzbar.

Der Ultraschall-Reflexionssensor und zumindest ein Teil dessen möglicher Ausführungsformen sowie die jeweiligen Vorteile wurden sinngemäß bereits im Zusammenhang mit dem erfindungsgemäßen Ultraschallgenerator erläutert.

Die Aufgabe der Erfindung wird auch gelöst durch ein Verfahren gemäß Patentanspruch 13 zum Betreiben eines erfindungsgemäßen Ultraschallgenerators, bei dem wie folgt vorgegangen wird: Der Sende-Sollwert wird vorgegeben. Dabei werden wie oben erläutert insbesondere Toleranzen, d.h. vielmehr ein Sollwertbereich, vorgegeben. Am Eingang wird die Versorgungsspannung angelegt. Die Steuereinheit steuert das Schaltelement im PWM-Betrieb mit dem das Puls-Pause-Verhältnis aufweisenden PWM-Signal an und wählt dabei das Puls-Pause-Verhältnis auf Basis der mit der Sendeleistung des Ultraschalls korrelierten Kenngröße so, dass unabhängig von der Größe bzw. dem Wert der Versorgungsspannung die Sendeleistung dem Sende-Sollwert entspricht.

Das Verfahren und zumindest ein Teil dessen möglicher Ausführungsformen sowie die jeweiligen Vorteile wurden sinngemäß bereits im Zusammenhang mit dem erfindungsgemäßen Ultraschallsensor erläutert.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: ein Blockschaltbild eines Ultraschallgenerators gemäß Stand der Technik,
- Figur 2: ein Blockschaltbild eines erfindungsgemäßen Ultraschallgenerators mit Übertrager,
- Figur 3: einen Verlauf von Puls-Pausen-Verhältnissen über einer Versorgungsspannung in einer Abbildungsvorschrift,
- Figur 4: ein Blockschaltbild eines erfindungsgemäßen Ultraschallgenerators ohne Übertrager,
- Figur 5: ein Blockschaltbild eines erfindungsgemäßen Ultraschallgenerators mit Gegentaktendstufe.

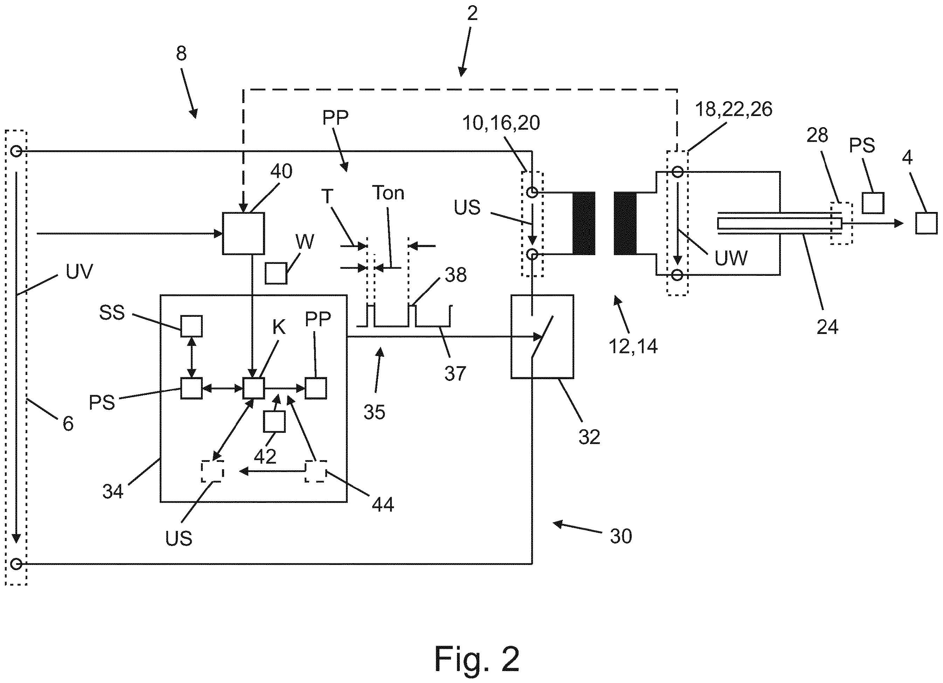

Figur 2 zeigt in einer Darstellung entsprechend Figur 1 ein Blockschaltbild eines erfindungsgemäßen Ultraschallgenerators 2, der zur Erzeugung eines Ultraschallsignals in Form von Ultraschall 4 aus einer Versorgungsspannung UV in Form einer Gleichspannung dient. Die Versorgungsspannung UV kann im Beispiel Werte zwischen 18V und 30V annehmen. Für diesen Spannungsbereich ist der Ultraschallgenerator 2 ausgelegt. Vorliegend beträgt der Wert W der Versorgungsspannung UV konstant 20V. Der Ultraschallgenerator 2 weist einen zweipoligen Eingang 6 auf, an dem im Betrieb die Versorgungsspannung UV angelegt wird bzw. ist.

Der Ultraschallgenerator 2 enthält eine Schalteinheit 8, die den Eingang 6 und einen zweipoligen Ausgang 10 aufweist. Die Schalteinheit 8 erzeugt aus der Versorgungsspannung UV - wie weiter unten noch erläutert wird - eine gepulste Schaltspannung US, die in Pulsform zwischen der Höhe 0V und der Versorgungsspannung UV (hier 20V) wechselt und die am Ausgang 10 zwischen dessen Polen anliegt.

Der Ultraschallgenerator 2 enthält ein Koppelelement 12 mit einem zweipoligen Koppeleingang 16 und einem zweipoligen Koppelausgang 18. Der Koppeleingang 16 ist an den Ausgang 10 angeschlossen. Das Koppelelement 12 ist hier ein Übertrager 14, dessen Primäranschluss 20 der Koppeleingang 16 ist und dessen Sekundäranschluss 22 der Koppelausgang 18 ist. Der Übertrager 14 überträgt dabei die Schaltspannung US von 0V / 20V zwischen den beiden Polen des Koppeleingangs 16 auf eine hochtransformierte Wandlerspannung UW, eine Wechselspannung mit einer Amplitude von im Beispiel 300V zwischen den beiden Polen des Koppelausgangs 18.

Der Ultraschallgenerator 2 enthält einen Wandler 24, hier einen Piezowandler, mit einem zweipoligen Wandlereingang 26 und einem Wandlerausgang 28. Der Wandlereingang 26 ist an den Koppelausgang 18 angeschlossen. Der Wandler 24 erzeugt aus der Wandlerspannung UW am Wandlereingang 26 den Ultraschall 4, den er durch den Wandlerausgang 28 abgibt. Der Ultraschall 4 weist dabei eine Sendleistung PS auf.

Die Schalteinheit 8 weist einen Stromkreis 30 auf. Dieser enthält in Reihenanordnung den Eingang 6, den Ausgang 10 und ein Schaltelement 32, hier einen HalbleiterLeistungsschalter. Die Schalteinheit 8 enthält eine Steuereinheit 34, hier einen Mikrocontroller, die wie folgt eingerichtet ist:
Sie steuert den Schalter 32 in einem PWM-Betrieb mit einem PWM-Signal 35 an, d.h. sie öffnet den Schalter in einer Pause 37 und schließt den Schalter in einem Puls 38 des PWM-Signals 35 im Wechsel. Damit liegen am Ausgang 10 also im Wechsel jeweils 0V oder die Versorgungsspannung UV, also 20V an. Dabei wählt die Steuereinheit 34 ein Puls-Pausen-Verhältnis PP für das PWM-Signal 35 auf Basis einer Kenngröße K, hier dem Wert W der Versorgungsspannung UV. Diese Kenngröße K ist - unter der Annahme eines gleichbleibenden Puls-Pause-Verhältnisses PP - mit der Sendeleistung PS korreliert, denn letztere steigt, wenn der Wert W der Versorgungsspannung UV steigt und umgekehrt. Die Wahl erfolgt nach einer Abbildungsvorschrift 42.

Für das Puls-Pausen-Verhältnis PP im PWM-Signal 35 gelten die Ausführungen zu Figur 1 entsprechend. Allerdings beträgt nunmehr das Puls-Pausenverhältnis nicht mehr fest 50%, sondern wird von der Steuereinheit 34 variabel gewählt, hier im Bereich 17% bis 49%, siehe unten. D.h., die Einschaltdauer Ton von Pulsen 38 beträgt zwischen 17% und 39% der Periodendauer T, die restlichen Periodendauer T besteht aus der Pause 37.

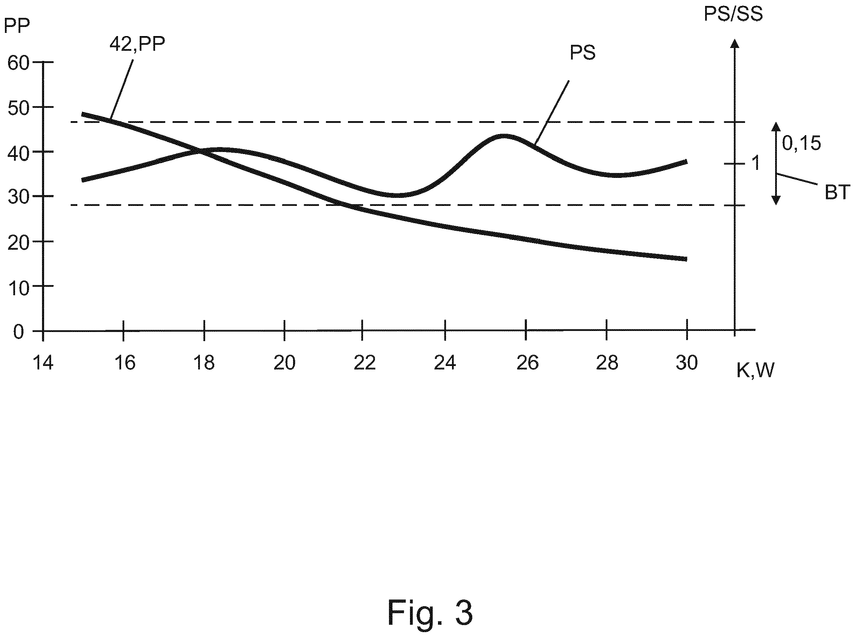

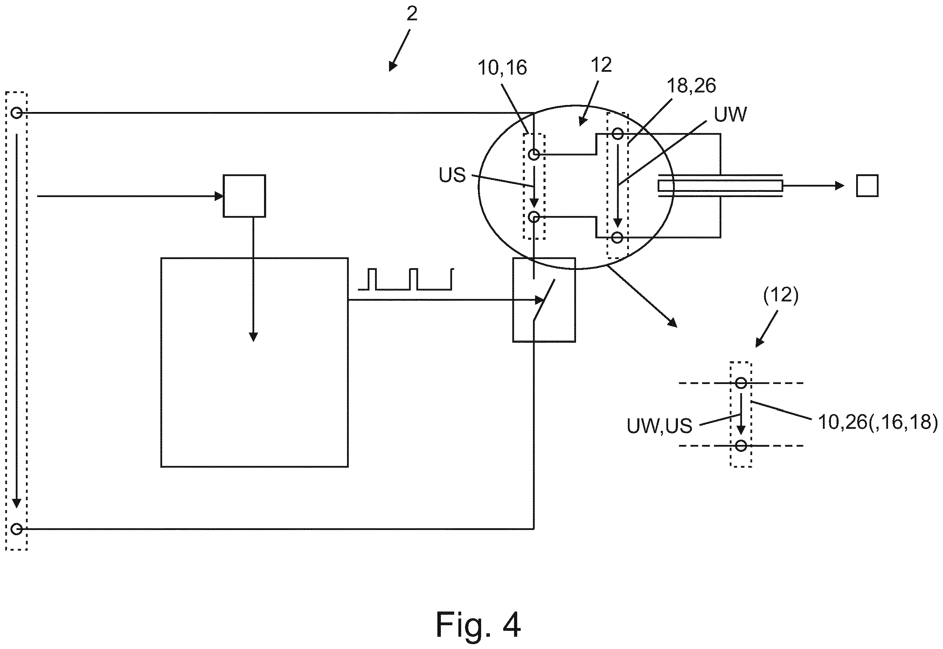

Figur 3 zeigt die Abbildungsvorschrift 42. Die Abbildungsvorschrift 42 ordnet jedem Wert der Kenngröße K (Abszisse in Figur 4), hier dem Wert W der Versorgungsspannung zwischen 15V und 30V einen Wert für das Puls-Pausen-Verhältnis PP (Ordinate) zu. Die Abbildungsvorschrift ist so gewählt, das für jede Zuordnung der Kenngröße K zum Puls-Pause-Verhältnis PP sich eine Sendeleistung PS einstellt, die dem vorgegebenen Sende-Sollwert SS (hier ein erlaubter Toleranz-Bereich BT) entspricht. In der Figur ist daher auch ein beispielhafter Verlauf einer Sendeleistung PS über dem Kennwert K dargestellt, wobei die Sendeleistung PS auf den Sendesollwert SS normiert ("1" in der Figur) ist. Der Toleranzbereich BT beträgt +/- 7,5 % des Sendesollwertes, also insgesamt 15% ("0,15" in der Figur).

Figur 2 zeigt weiterhin folgendes: Sinnbildlich ist die Einhaltung des Sende-Sollwertes SS durch die Sendeleistung PS in Bezug auf die Kenngröße dargestellt. Um die Kenngröße K zu ermitteln, enthält der Ultraschallgenerator 2 eine Messeinheit 40, hier einen Spannungsmesser für die Versorgungsspannung UV bzw. deren Wert W. In einer nicht dargestellten alternativen Ausführungsform ist die Messeinheit 40 in die Steuereinheit 34 (in Form eines Mikrocontrollers) derart integriert, dass der Mikrocontroller eine Spannungsmessfunktion bzw. ein entsprechendes Modul aufweist. Die Wertepaare der Abbildungsvorschrift 42 (Verlauf der Kurve in Figur 2, Zuordnung K zu PP) sind so gewählt, dass sich für alle Werte der Kenngröße K eine konstante (d.h. sich innerhalb des Toleranzbereiches BT befindliche) Sendeleistung PS des Ultraschalls 4 ergibt. Die Sendeleistung PS bzw. deren Wert entspricht dann in diesem Sinne stets einem Sende-Sollwert SS (Wert "1" mit Toleranzbereich "0,15").

Figur 2 zeigt gestichelt auch eine nicht zur Erfindung gehörende alternative Ausführungsform des Ultraschallgenerators 2.

Als Kenngröße K ist hier der Wert W der Wandlerspannung UW anstelle der Versorgungsspannung UV gewählt. Die Messung bzw. Bestimmung des Kennwertes W durch die Messeinheit 40 ist wiederum - hier z.B. ohne Umsetzung der Spannungsniveaus von ca. 300V auf die Niederspannungsseite von ca. 15V - stark vereinfacht dargestellt. Anstelle der Nutzung der Abbildungsvorschrift 42 wird der Kennwert nunmehr in einer Regelvorschrift 44 verarbeitet. Dabei wird der Kennwert K durch Einregelung des Puls-Pause-Verhältnisses PP auf einen vorgebbaren Spannungs-Sollwert US eingeregelt, der dem gewünschten Sende-Sollwert SS der Sendeleistung PS entspricht.

Figur 4 zeigt eine alternative Ausführungsform eines Ultraschallgenerators 2, bei dem kein Übertrager 14 vorgesehen ist. Das Koppelelement 12 ist daher als zweipolige direkte Durchverbindung zwischen Ausgang 10 bzw. Koppeleingang 16 und Wandlereingang 26 bzw. Koppelausgang 18 ausgebildet. Die Wandlerspannung UW wird damit identisch zur Schaltspannung US. Dabei sind die Durchverbindungen infinitesimal klein ausgebildet und können daher prinzipiell - wie in der Figur 4 im Detail angedeutet - weggelassen werden. Mit anderen Worten ist damit der Wandlereingang 26 direkt mit dem Ausgang 10 verbunden, da das Koppelement 12 zu einem Nullelement entartet ist und die Koppelanschlüsse 16,18 faktisch verschwinden bzw. mit den Ausgang 10 und dem Wandlereingang 26 zusammenfallen (das faktische Verschwinden ist durch Einklammerung in Figur 4 angedeutet).

Um Wandlerspannungen UW im gewünschten Bereich von ca. 300V zu erzielen, wird bei der Schaltung in Fig. 4 eine Versorgungsspannung UV in der entsprechenden Höhe von ca. 300V verwendet, die dann pulsweise direkt auf die Schaltspannung US geschaltet wird. So wird der gesamte Ultraschallgenerator 2 entsprechend mit derart vergleichsweise hohen Spannungen gegenüber dem Ultraschallgenerator 2 aus Figur 2 betrieben.

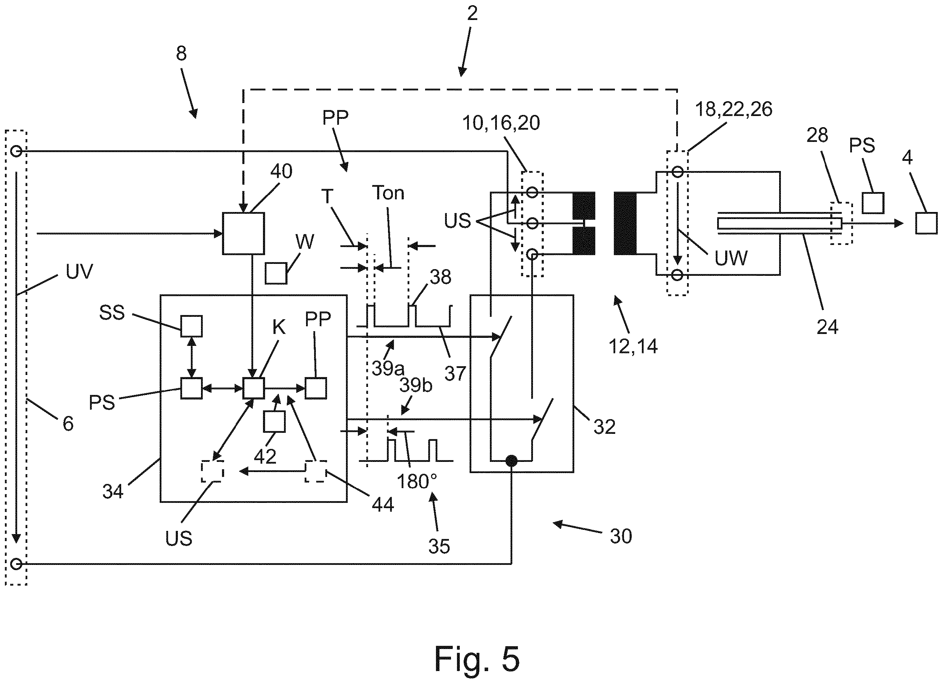

Figur 5 zeigt eine weitere alternative Ausführungsform eines Ultraschallgenerators 2. Hier ist das Koppelelement 12 bzw. der Übertrager 14 als solcher mit eingangsseitiger Mittenanzapfung ausgeführt. Damit ist der Ausgang 10, sowie der Koppeleingang 16 bzw. der Primäranschluss 20 dreipolig statt wie im Beispiel oben zweipolig ausgeführt. Die Verbindung vom Ausgang 10 zum Schaltelement 32 in der nach wie vor bestehenden Reihenanordnung erfolgt nunmehr zweipolig durch zwei Verbindungsleitungen. Das Schaltelement 32 enthält zwei einzelne Schalter, die jeweils einen der beiden vom Ausgang 10 kommenden Anschlüsse bedienen, also diesen jeweils geschaltet zur Versorgungsspannung UV zurückführen. Die Steuereinheit 34 erzeugt nun ein PWM-Signal 35 in Form von zwei gegentaktigen PWM-Teilsignalen 39a,b. Das Puls-Pausenverhältnis ist hier bei beiden Teilsignalen 39a,b identisch. Das Teilsignal 39b ergibt sich als um 180° phasenverschobenes Teilsignal 39a.

### Bezugszeichenliste

- 2: Ultraschallgenerator
- 4: Ultraschall
- 6: Eingang
- 8: Schalteinheit
- 10: Ausgang
- 12: Koppelelement
- 14: Übertrager
- 16: Koppeleingang
- 18: Koppelausgang
- 20: Primäranschluss
- 22: Sekundäranschluss
- 24: Wandler
- 26: Wandlereingang
- 28: Wandlerausgang
- 30: Stromkreis
- 32: Schaltelement
- 34: Steuereinheit
- 35: PWM-Signal
- 37: Pause
- 38: Puls
- 39a,b: PWM-Teilsignal
- 40: Messeinheit
- 42: Abbildungsvorschrift
- 44: Regelvorschrift

- 500: Netzteil

- UV: Versorgungsspannung
- UI: interne Versorgungsspannung
- W: Wert
- US: Schaltspannung
- UW: Wandlerspannung
- PS: Sendeleistung
- PP: Puls-Pausen-Verhältnis
- K: Kenngröße
- SS: Sende-Sollwert
- US: Spannungs-Sollwert
- T: Periodendauer
- Ton: Einschaltzeit
- BT: Toleranz-Bereich

## Patentansprüche

1. Ultraschallgenerator (2),
- mit einem Eingang (6) für eine Versorgungsspannung (UV) in Form einer Gleichspannung,
- mit einer den Eingang (6) und einen Ausgang (10) aufweisenden Schalteinheit (8), die dazu eingerichtet ist, aus der Versorgungsspannung (UV) am Eingang (6) eine Schaltspannung (US) am Ausgang (10) zu erzeugen,
- mit einem Koppelelement (12), das mit seinem Koppeleingang (16) am Ausgang (10) angeschlossenen ist und das einen Koppelausgang (18) aufweist und das dazu eingerichtet ist, die am Koppeleingang (16) anliegende Schaltspannung (US) auf eine Wandlerspannung (UW) am Koppelausgang (18) abzubilden,
- mit einem Wandler (24), der mit seinem Wandlereingang (26) am Koppelausgang (18) angeschlossenen ist und der einen Wandlerausgang (28) aufweist und der dazu eingerichtet ist, aus der Wandlerspannung (UW) Ultraschall (4) am Wandlerausgang (28) zu erzeugen und dort abzustrahlen, wobei der erzeugte Ultraschall (4) im Betrieb eine Sendeleistung (PS) aufweist,
- wobei die Schalteinheit (8) einen Stromkreis (30) enthält, der in Reihenanordnung den Eingang (6), den Ausgang (10) und ein Schaltelement (32) aufweist, und die Schalteinheit (8) eine Steuereinheit (34) enthält,
- wobei die Steuereinheit (34) dazu eingerichtet ist, das Schaltelement (32) in einem Pulsweitenmodulations, PWM, -Betrieb mit einem PWM-Signal (35) mit einem Puls-Pause-Verhältnis (PP) anzusteuern und dabei das Puls-Pause-Verhältnis (PP) des PWM-Signals (35) auf Basis einer mit der Sendeleistung (PS) des Ultraschalls (4) korrelierten Kenngröße (K) so zu wählen, dass unabhängig vom Wert (W) der Versorgungsspannung (UV) die Sendeleistung (PS) einem vorgebbaren Sende-Sollwert (SS) entspricht,
- wobei die Kenngröße (K) der Wert (W) der Versorgungsspannung (UV) ist und die Steuereinheit (34) dazu eingerichtet ist, das Puls-Pause-Verhältnis (PP) dadurch zu wählen, dass die Kenngröße (K) nach einer vorgebbaren Abbildungsvorschrift (42) auf das Puls-Pausen-Verhältnis (PP) abgebildet wird und dadurch die Sendeleistung (PS) dem Sende-Sollwert (SS) entspricht.

2. Ultraschallgenerator (2) nach Anspruch 1,
**dadurch gekennzeichnet, dass**
das Koppelelement (12) ein Übertrager (14) ist, und der Koppeleingang (16) ein Primäranschluss (20) des Übertragers (14) ist und der Koppelausgang (18) ein Sekundäranschluss (22) des Übertragers (14) ist und der Übertrager (14) dazu eingerichtet ist, die am Primäranschluss (20) anliegende Schaltspannung (US) in die Wandlerspannung (UW) am Sekundäranschluss (22) zu übertragen.

3. Ultraschallgenerator (2) nach einem der vorhergehenden Ansprüche,
**dadurch gekennzeichnet, dass**
die Steuereinheit (34) dazu eingerichtet ist, das Puls-Pause-Verhältnis (PP) zu senken, wenn der Wert (W) der Versorgungsspannung (UV) zunimmt und umgekehrt.

4. Ultraschallgenerator (2) nach einem der vorhergehenden Ansprüche,
**dadurch gekennzeichnet, dass**
die Steuereinheit (34) dazu eingerichtet ist, das Puls-Pause-Verhältnis (PP) zwischen 0,1% und 65% zu wählen und/oder der Ultraschallgenerator (2) für Versorgungsspannung (UV) zwischen 15V und 50 V eingerichtet ist und/oder der Ultraschallgenerator (2) für Schaltspannungen (US) im Bereich zwischen 5V und 30V eingerichtet ist.

5. Ultraschallgenerator (2) nach einem der vorhergehenden Ansprüche,
**dadurch gekennzeichnet, dass**
die Schalteinheit (8) eine mit der Steuereinheit (34) verbundene Messeinheit (40) zur Ermittlung der Kenngröße (K) enthält.

6. Ultraschallgenerator (2) nach Anspruch 5,
**dadurch gekennzeichnet, dass**
die Steuereinheit (34) die Messeinheit (40) enthält.

7. Ultraschallgenerator (2) nach einem der vorhergehenden Ansprüche,
**dadurch gekennzeichnet, dass**
die Steuereinheit (34) einen Mikrocontroller enthält.

8. Ultraschallgenerator (2) nach einem der vorhergehenden Ansprüche,
**dadurch gekennzeichnet, dass**
das Schaltelement (32) ein elektronischer Schalter ist.

9. Ultraschallgenerator (2) nach einem der vorhergehenden Ansprüche,
**dadurch gekennzeichnet, dass**
dieser kein Netzteil (500) enthält.

10. Ultraschall-Schrankensensor,
mit einem Sendeteil zum Aussenden von Ultraschall (4), und einem Empfangsteil zum Empfangen zumindest eines Teils des ausgesendeten Ultraschalls (4), bei dem der Sendeteil einen Ultraschallgenerator (2) nach einem der Ansprüche 1 bis 9 zum Erzeugen des Ultraschalls (4) enthält.

11. Ultraschall-Schrankensensor nach Anspruch 10,
**dadurch gekennzeichnet, dass**
dieser ein Doppelbogensensor oder Doppelmaterialsensor ist.

12. Ultraschall- Reflexionssensor,
mit einem Ultraschallgenerator (2) nach einem der Ansprüche 1 bis 9 zum Erzeugen von auszusendendem Ultraschall (4), wobei der Wandler (24) auch zum Empfangen mindestens eines Teils von reflektiertem Ultraschall (4) ausgebildet ist.

13. Verfahren zum Betreiben eines Ultraschallgenerators (2) nach einem der Ansprüche 1 bis 9, bei dem:
- der Sende-Sollwert (SS) vorgegeben wird,
- am Eingang (6) die Versorgungsspannung (UV) angelegt wird,
- die Steuereinheit (34) das Schaltelement (32) im PWM-Betrieb mit dem PWM-Signal mit dem Puls-Pause-Verhältnis (PP) ansteuert und dabei das Puls-Pause-Verhältnis (PP) auf Basis der mit der Sendeleistung (PS) des Ultraschalls (4) korrelierten Kenngröße (K) so wählt, dass unabhängig vom Wert (W) der Versorgungsspannung (UV) die Sendeleistung (PS) dem Sende-Sollwert (SS) entspricht.

## Claims

1. An ultrasound generator (2),
- having an input (6) for a supply voltage (UV) in the form of a direct current voltage,
- having a switching unit (8) which comprises the input (6) and an output (10) and which is arranged to generate a switching voltage (US) at the output (10) from the supply voltage (UV) at the input (6),
- having a coupling element (12) which, by a coupling input (16) thereof, is connected to the output (10) and comprises a coupling output (18) and which is arranged to map the switching voltage (US) applied to the coupling input (16) onto a transducer voltage (UW) at the coupling output (18),
- having a transducer (24) which, by a transducer input thereof (26), is connected to the coupling output (18) and which comprises a transducer output (28) and which is arranged to generate ultrasound (4) at the transducer output (28) from the transducer voltage (UW) and to radiate said ultrasound (4) at said transducer output (28), wherein the generated ultrasound (4) has a transmission power (PS) during operation,
- wherein the switching unit (8) contains a circuit (30) which, in a series arrangement, comprises the input (6), the output (10) and a switching element (32), and the switching unit (8) contains a control unit (34),
- wherein the control unit (34) is arranged to actuate the switching element (32) in a pulse-width modulation, *Pulsweitenmodulation* - PWM, mode with a PWM signal (35) having a pulse-pause ratio (PP) and, when doing so, to select the pulse-pause ratio (PP) of the PWM signal (35) on the basis of a characteristic (K) correlated with the transmission power (PS) of the ultrasound (4), such that the transmission power (PS) corresponds to a predefinable transmission target value (SS) independently of the value (W) of the supply voltage (UV),
- wherein the characteristic (K) is the value (W) of the supply voltage (UV), and the control unit (34) is arranged to select the pulse-pause ratio (PP) by the characteristic (K) being mapped onto the pulse-pause ratio (PP) according to a predefinable mapping rule (42) and the transmission power (PS) thus corresponds to the transmission target value (SS).

2. The ultrasound generator (2) according to Claim 1,
**characterized in that** the coupling element (12) is a transformer (14), and the coupling input (16) is a primary terminal (20) of the transformer (14), and the coupling output (18) is a secondary terminal (22) of the transformer (14), and the transformer (14) is arranged to transform the switching voltage (US) applied to the primary terminal (20) into the transducer voltage (UW) at the secondary terminal (22).

3. The ultrasound generator (2) according to any one of the preceding claims,
**characterized in that**
the control unit (34) is arranged to reduce the pulse-pause ratio (PP) if the value (W) of the supply voltage (UV) increases, and vice versa.

4. The ultrasound generator (2) according to any one of the preceding claims,
**characterized in that**
the control unit (34) is arranged to select the pulse-pause ratio (PP) between 0.1% and 65%, and/or the ultrasound generator (2) is arranged for a supply voltage (UV) between 15 V and 50 V, and/or the ultrasound generator (2) is arranged for switching voltages (US) in the range between 5 V and 30 V

5. The ultrasound generator (2) according to any one of the preceding claims,
**characterized in that**
the switching unit (8) contains a measurement unit (40) which is connected to the control unit (34) and which is intended for determining the characteristic (K).

6. The ultrasound generator (2) according to Claim 5,
**characterized in that**
the control unit (34) contains the measurement unit (40).

7. The ultrasound generator (2) according to any one of the preceding claims, **characterized in that**
the control unit (34) contains a microcontroller.

8. The ultrasound generator (2) according to any one of the preceding claims, **characterized in that**
the switching element (32) is an electronic switch.

9. The ultrasound generator (2) according to any one of the preceding claims, **characterized in that**
it does not contain a power pack (500).

10. An ultrasound barrier sensor,
having a transmission part for emitting ultrasound (4), and a reception part for receiving at least a portion of the emitted ultrasound (4), the transmission part containing an ultrasound generator (2) according to any one of Claims 1 to 9 for generating the ultrasound (4).

11. The ultrasound barrier sensor according to Claim 10,
**characterized in that**
it is a double sheet sensor or double material sensor.

12. An ultrasound reflection sensor,
having an ultrasound generator (2) according to any one of Claims 1 to 9 for generating ultrasound (4) to be emitted, wherein the transducer (24) is also designed to receive at least a portion of reflected ultrasound (4).

13. A method for operating an ultrasound generator (2) according to any one of Claims 1 to 9, in which:
- the transmission target value (SS) is predefined,
- the supply voltage (UV) is applied to the input (6),
- the control unit (34) actuates the switching element (32) in the PWM mode with the PWM signal having the pulse-pause ratio (PP) and, when doing so, selects the pulse-pause ratio (PP) on the basis of a characteristic (K) correlated with the transmission power (PS) of the ultrasound (4), in such a way that the transmission power (PS) corresponds to the transmission target value (SS) independently of the value (W) of the supply voltage (UV).

## Revendications

1. Générateur d'ultrasons (2),
- avec une entrée (6) pour une tension d'alimentation (UV) sous la forme d'une tension continue,
- avec une unité de commutation (8) présentant l'entrée (6) et une sortie (10), qui est agencée pour générer une tension de commutation (US) à la sortie (10) à partir de la tension d'alimentation (UV) à l'entrée (6),
- avec un élément de couplage (12) qui est raccordé par son entrée de couplage (16) à la sortie (10) et qui présente une sortie de couplage (18) et qui est agencé pour reproduire la tension de commutation (US) appliquée à l'entrée de couplage (16) sur une tension de convertisseur (UW) à la sortie de couplage (18),
- avec un convertisseur (24) qui est raccordé par son entrée de convertisseur (26) à la sortie de couplage (18) et qui présente une sortie de convertisseur (28) et qui est agencé pour générer des ultrasons (4) à la sortie de convertisseur (28) à partir de la tension de convertisseur (UW) et pour les y rayonner, les ultrasons générés (4) présentant en fonctionnement une puissance d'émission (PS),
- l'unité de commutation (8) contenant un circuit électrique (30) qui présente en série l'entrée (6), la sortie (10) et un élément de commutation (32), et l'unité de commutation (8) contenant une unité de commande (34),
- l'unité de commande (34) étant agencée pour commander l'élément de commutation (32) dans un mode de modulation de largeur d'impulsion, *Pulsweitenmodulation* - PWM, avec un signal PWM (35) ayant un rapport impulsion-pause (PP) et pour sélectionner alors le rapport impulsion-pause (PP) du signal PWM (35) sur la base d'une grandeur caractéristique (K) corrélée à la puissance d'émission (PS) des ultrasons (4), de telle sorte qu'indépendamment de la valeur (W) de la tension d'alimentation (UV), la puissance d'émission (PS) correspond à une valeur de consigne d'émission (SS) prédéfinissable,
- la grandeur caractéristique (K) étant la valeur (W) de la tension d'alimentation (UV) et l'unité de commande (34) étant agencée pour sélectionner le rapport impulsion-pause (PP) de telle sorte que la grandeur caractéristique (K) est reproduite sur le rapport impulsion-pause (PP) selon une règle de reproduction (42) prédéfinissable et la puissance d'émission (PS) correspond ainsi à la valeur de consigne d'émission (SS).

2. Générateur d'ultrasons (2) selon la revendication 1,
**caractérisé en ce que**
l'élément de couplage (12) est un transmetteur (14), et l'entrée de couplage (16) est une borne primaire (20) du transmetteur (14) et la sortie de couplage (18) est une borne secondaire (22) du transmetteur (14) et le transmetteur (14) est agencé pour transférer la tension de commutation (US) appliquée à la borne primaire (20) dans la tension de convertisseur (UW) à la borne secondaire (22).

3. Générateur d'ultrasons (2) selon l'une quelconque des revendications précédentes, **caractérisé en ce que**
l'unité de commande (34) est agencée pour réduire le rapport impulsion-pause (PP) lorsque la valeur (W) de la tension d'alimentation (UV) augmente et inversement.

4. Générateur d'ultrasons (2) selon l'une quelconque des revendications précédentes, **caractérisé en ce que**
l'unité de commande (34) est agencée pour sélectionner le rapport impulsion-pause (PP) entre 0,1 % et 65 % et/ou le générateur d'ultrasons (2) est agencé pour une tension d'alimentation (UV) entre 15 V et 50 V et/ou le générateur d'ultrasons (2) est agencé pour des tensions de commutation (US) dans la plage entre 5 V et 30 V

5. Générateur d'ultrasons (2) selon l'une quelconque des revendications précédentes, **caractérisé en ce que**
l'unité de commutation (8) contient une unité de mesure (40) reliée à l'unité de commande (34) pour déterminer la grandeur caractéristique (K).

6. Générateur d'ultrasons (2) selon la revendication 5,
**caractérisé en ce que**
l'unité de commande (34) contient l'unité de mesure (40).

7. Générateur d'ultrasons (2) selon l'une quelconque des revendications précédentes, **caractérisé en ce que**
l'unité de commande (34) contient un microcontrôleur.

8. Générateur d'ultrasons (2) selon l'une quelconque des revendications précédentes, **caractérisé en ce que**
l'élément de commutation (32) est un commutateur électronique.

9. Générateur d'ultrasons (2) selon l'une quelconque des revendications précédentes, **caractérisé en ce que**
celui-ci ne contient pas de bloc d'alimentation (500).

10. Capteur de barrière à ultrasons,
avec une partie d'émission pour émettre des ultrasons (4), et une partie de réception pour recevoir au moins une partie des ultrasons émis (4), dans lequel la partie d'émission contient un générateur d'ultrasons (2) selon l'une quelconque des revendications 1 à 9 pour générer les ultrasons (4).

11. Capteur de barrière à ultrasons selon la revendication 10,
**caractérisé en ce que**
celui-ci est un capteur à double feuille ou un capteur à double matériau.

12. Capteur de réflexion à ultrasons,
avec un générateur d'ultrasons (2) selon l'une quelconque des revendications 1 à 9 pour générer des ultrasons (4) à émettre, le convertisseur (24) étant également configuré pour recevoir au moins une partie des ultrasons réfléchis (4).

13. Procédé d'exploitation d'un générateur d'ultrasons (2) selon l'une quelconque des revendications 1 à 9, dans lequel :
- la valeur de consigne d'émission (SS) est prédéfinie,
- la tension d'alimentation (UV) est appliquée à l'entrée (6),
- l'unité de commande (34) commande l'élément de commutation (32) dans le mode PWM avec le signal PWM ayant le rapport impulsion-pause (PP) et sélectionne alors le rapport impulsion-pause (PP) sur la base de la grandeur caractéristique (K) corrélée à la puissance d'émission (PS) des ultrasons (4) de telle sorte qu'indépendamment de la valeur (W) de la tension d'alimentation (UV), la puissance d'émission (PS) correspond à la valeur de consigne d'émission (SS).
